# EUROPEAN PATENT SPECIFICATION

(11) **EP 4 464 452 B1**
(45) Date of publication and mention of the grant of the patent: **18.06.2025**
(21) Application number: 24166430.9
(22) Date of filing: 26.03.2024
(51) Int. Cl.: B23K 26/03

(54) **SPUTTER MEASUREMENT SYSTEM**
SPRITZERMESSSYSTEM
SYSTÈME DE MESURE DES PROJECTIONS DE SOUDURE

(30) Priority: 16.05.2023 JP 2023080762
(43) Date of publication of application: 20.11.2024
(73) Proprietor: Prime Planet Energy & Solutions, Inc., Chuo-ku Tokyo 103-0022 (JP)
(72) Inventor: YOSHIDA, Takashi, Tokyo, 103-0022 (JP); SAKAMOTO, Akira, Tokyo, 103-0022 (JP)
(74) Representative: Kuhnen & Wacker Patent- und Rechtsanwaltsbüro PartG mbB

(56) References cited:
- JP-A- 2017 060 968
- US-A1- 2022 134 473

## Description

### BACKGROUND OF THE INVENTION

### Field of the Invention

The present disclosure relates to a technology for measuring a sputter generated during welding.

### Description of the Background Art

When welding a metal, there may occur a phenomenon in which a molten metal particle (sputter) in the form of a droplet flies from a surface of a molten portion that is melted during the welding. Since the sputter may decrease quality of the product after the welding, it is desirable to suppress generation of the sputter. For this purpose, first, it is desired to measure generation of the sputter.

As an exemplary apparatus for measuring generation of the sputter, for example, Japanese Patent Laying-Open No. 2019-188421 or US 2022/134473, discloses an apparatus that can measure the number of sputters by performing image processing on data obtained by capturing an image of a welded portion using a camera during welding.

### SUMMARY OF THE INVENTION

The sputters flying from the molten portion include not only a sputter involving a large amount of emission of light but also a sputter involving a small amount of emission of light. Therefore, when the sputters are simply captured in image by the camera, an image of the sputter involving a small amount of emission of light among the sputters flying from the molten portion cannot be captured, with the result that the sputter and the size of the sputter may be unable to be measured.

The present disclosure has been made to solve the above-described problem, and has an object to precisely measure a size of a sputter even when an amount of emission of light by the sputter is small.

(Item 1) A sputter measurement system according to the present disclosure is a sputter measurement system that measures a size of a sputter flying from a molten portion that is melted during welding, the sputter measurement system including: a camera that captures an image of an observation region including the molten portion; a spot light source that applies spot light toward the observation region from a lateral side with respect to the observation region when viewed from the camera; and a controller that measures the size of the sputter based on the image captured by the camera.

(Item 2) The sputter measurement system according to item 1 further includes a telecentric lens disposed between the molten portion and the camera.

(Item 3) In the sputter measurement system according to item 2, a position of the molten portion is included in a depth-of-field range of the telecentric lens, the sputter measurement system further including a member disposed between the molten portion and the spot light source, the member being provided with a slit for matching an application range of the spot light with the depth-of-field range of the telecentric lens.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a diagram schematically showing an exemplary overall configuration of a sputter measurement system.
Fig. 2 is a first diagram schematically showing a principle of measuring a sputter.
Fig. 3 is a diagram showing an exemplary image of an observation region captured by a camera.
Fig. 4 is a second diagram schematically showing a principle of measuring a sputter.

### DESCRIPTION OF THE PREFERRED EMBODIMENTS

### [System Configuration]

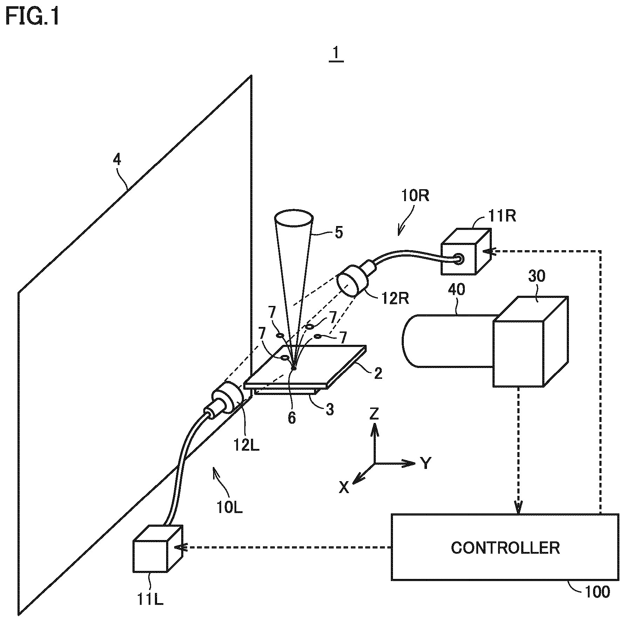

Fig. 1 is a diagram schematically showing an exemplary overall configuration of a sputter measurement system 1 according to the present embodiment. Base members 2, 3 each composed of a metal are welded by laser light 5 emitted from a laser generation apparatus (not shown) for the sake of processing. A portion to which laser light 5 is applied during the welding is melted to become a molten portion 6. By moving the laser generation apparatus in a welding proceeding direction (Y direction in the figure), a welding bead extending in the Y direction in the figure is formed. It should be noted that in the figure, the Y direction represents the above-described welding proceeding direction, the Z direction represents a normal direction of each of base members 2, 3, and the X direction represents a direction orthogonal to the Y direction and the Z direction.

During the welding of base members 2, 3, sputters 7 may fly from molten portion 6. Each of sputters 7 may decrease quality of the product after the welding. For example, in the case where the welding is performed to connect between a cell terminal of a power storage battery and a bus bar, flying of sputter 7 can be a factor of short-circuiting or disconnecting a wiring therearound due to sputter 7 breaking a resin coating material that covers the wiring, or can be a factor of short-circuiting a circuit of a substrate therearound due to sputter 7 being adhered between welding pins of the substrate. Therefore, it is desirable to suppress generation of sputter 7 itself or to ensure that no problem is caused even when sputter 7 is generated. For this purpose, first, it is desired to measure generation of the sputter.

In view of such a point, sputter measurement system 1 according to the present embodiment is configured to measure the size (dimension) of sputter 7 flying from molten portion 6. Specifically, sputter measurement system 1 includes spot light sources 10R, 10L, a camera 30, a telecentric lens 40, and a controller 100.

Camera 30 captures, at a high speed, an image of an observation region including molten portion 6 that is melted by laser light 5. Camera 30 outputs, to controller 100, image data obtained by the image capturing. It should be noted that a blackout curtain 4 that does not reflect light is disposed on the rear side with respect to the observation region when viewed from camera 30.

Telecentric lens 40 is disposed in an optical path between molten portion 6 and camera 30. Telecentric lens 40 is a special lens that can produce light having a main optical axis parallel to the optical axis of the lens, unlike an ordinary lens. Due to its optical characteristic, telecentric lens 40 has a region (hereinafter also referred to as "depth-of-field region R1") in which the size of the image of the target is not changed even when a distance between camera 30 and the target is changed. Therefore, by capturing the image of the target, i.e., sputter 7 using camera 30 with telecentric lens 40 being interposed therebetween, the size of the image of sputter 7 is not changed regardless of the position of sputter 7 (even when the position of sputter 7 is deviated from the focal position due to flying) as long as sputter 7 is included in depth-of-field region R1 of telecentric lens 40, and distortion of the image due to parallax is not caused.

The sputters flying from molten portion 6 include not only a sputter involving a large amount of emission of light but also a sputter involving a small amount of emission of light. Therefore, when sputters 7 are simply captured in image by camera 30, an image of the sputter involving a small amount of emission of light among sputters 7 flying from molten portion 6 cannot be captured, with the result that the sputter and the size of the sputter may be unable to be measured.

In view of such a point, sputter measurement system 1 according to the present embodiment includes spot light sources 10R, 10L. Each of spot light sources 10R, 10L emits spot light that spreads in the form of a cone as irradiation light for observation of each of the sputters. Spot light sources 10R, 10L are disposed at positions facing each other with molten portion 6 being interposed therebetween.

Spot light source 10R emits spot light toward the right side of the observation region including molten portion 6 when viewed from camera 30. Specifically, spot light source 10R includes: a light source 11R that generates light having a high luminance in accordance with a command from controller 100; and a light source lens 12R that converts the light generated by light source 11R into spot light and that emits the spot light toward molten portion 6. The optical axis of light source lens 12R is orthogonal to the optical axis of camera 30.

Spot light source 10L emits spot light toward the left side of the observation region including molten portion 6 when viewed from camera 30. Specifically, spot light source 10L includes: a light source 11L that generates light having a high luminance in accordance with a command from controller 100; and a light source lens 12L that converts the light generated by light source 11L into spot light and that emits the spot light toward molten portion 6. The optical axis of light source lens 12L is orthogonal to the optical axis of camera 30.

Controller 100 includes a CPU (Central Processing Unit), and a memory such as a ROM (Read Only Memory) and a RAM (Random Access Memory). During the welding of base members 2, 3, controller 100 measures the size of sputter 7 flying from molten portion 6 based on image data captured by camera 30 with spot light sources 10R, 10L being each operated to laterally apply the spot light to the observation region including molten portion 6.

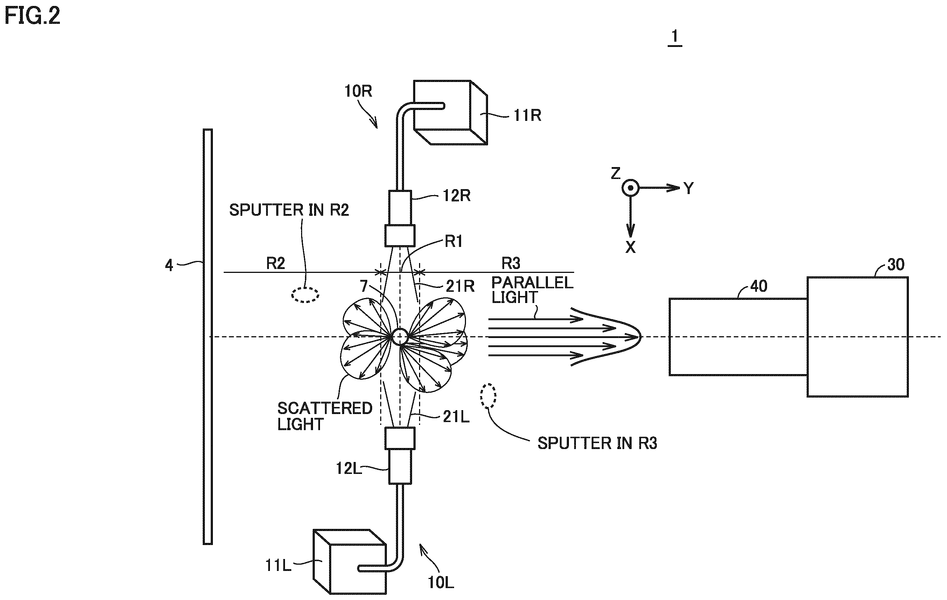

Fig. 2 is a diagram schematically showing a principle of measuring sputter 7 by sputter measurement system 1. Sputter 7 is measured in an in-process manner during the welding of base members 2, 3.

The observation region captured in image by camera 30 includes: a depth-of-field region R1 of telecentric lens 40; a remote region R2 far away from camera 30 with respect to depth-of-field region R1; and a close region R3 close to camera 30 with respect to depth-of-field region R1. It should be noted that depth-of-field region R1 is in a range of several mm from the focal position.

During the measurement of sputter 7, a relative position between molten portion 6 and telecentric lens 40 in the Y direction is adjusted such that molten portion 6 is included in depth-of-field region R1 of telecentric lens 40. Further, a relative position between molten portion 6 and each of light source lenses 12R, 12L in the Y direction is adjusted to apply spot light 21R and spot light 21L to the observation region including molten portion 6. Further, in the present embodiment, a relative position between molten portion 6 and each of light source lenses 12R, 12L in the X direction or an application angle (spreading) of each of spot light 21R and spot light 21L is adjusted to substantially match the application range of each of spot light 21R and spot light 21L with depth-of-field region R1.

When sputter 7 does not exist in the observation region, the target to which each of spot light 21R and spot light 21L is applied does not exist in the observation region, and only blackout curtain 4 is captured in image by camera 30, with the result that the entire image of the observation region becomes a dark spot.

On the other hand, when sputter 7 exists in depth-of-field region R1 of telecentric lens 40, spot light 21R and spot light 21L are applied onto the left and right sides of sputter 7. Thus, diffused light (scattered light) is generated on each of the left and right sides of sputter 7, and parallel light passing through telecentric lens 40 in the diffused light is captured in image by camera 30. Therefore, the shape of sputter 7 on each of the left and right sides is captured in image as a bright spot. In other words, in the present embodiment, by applying spot light 21R and spot light 21L onto the respective lateral sides of sputter 7 that is the measurement target, the shape of sputter 7 on each of the left and right sides is captured in image by camera 30. Controller 100 measures the size of sputter 7 in accordance with the shape of sputter 7 on each of the respective lateral sides as captured in image by camera 30. As a result, even when the amount of emission of light by sputter 7 is small, sputter 7 and the size of sputter 7 can be precisely measured.

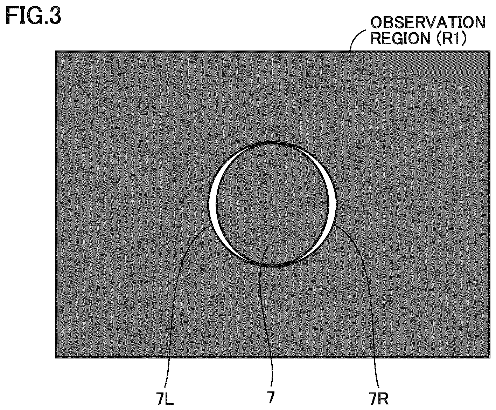

Fig. 3 is a diagram showing an exemplary image of the observation region captured by camera 30. Bright spot portions 7R, 7L included in the image of the observation region are images of shapes of edges, on the right and left sides, of sputter 7 existing in depth-of-field region R1. Controller 100 estimates an entire shape of sputter 7 in accordance with the shapes of bright spot portions 7R, 7L, and measures the size (dimension) of sputter 7 in accordance with the estimated entire shape.

When sputter 7 exists in depth-of-field region R1 of telecentric lens 40, the measured size of the sputter is substantially unchanged regardless of whether the sputter is far from or close to the camera. Therefore, even when sputter 7 is moved due to flying, the size (dimension) of sputter 7 can be precisely measured as long as sputter 7 exists in depth-of-field region R1.

Returning to Fig. 2, when the sputter exists in remote region R2 or close region R3, the size of the image of the sputter is changed depending on whether the sputter is far from or close to camera 30 (distance to camera 30), with the result that it becomes difficult to precisely measure the size of the sputter.

In view of this point, in the present embodiment, as described above, the application range of each of spot light 21R and spot light 21L is adjusted to be substantially matched with depth-of-field region R1. Therefore, the sputter in each of remote region R2 and close region R3 is not irradiated with spot light 21R and spot light 21L, with the result that the sputter is not captured in the image of the observation region. Thus, sputter 7 existing in each of remote region R2 and close region R3 in each of which the size of the image is changed depending on whether or not sputter 7 is far from or close to the camera is excluded from the dimension measurement target. Therefore, precision in the measurement of sputter 7 is suppressed from being decreased.

As described above, in sputter measurement system 1 according to the present embodiment, spot light 21R and spot light 21L are applied onto the lateral sides of sputter 7 to generate the diffused light (scattered light) on each of the lateral sides of sputter 7, the shape of sputter 7 on each of the lateral sides is measured by capturing the diffused light in image by camera 30, and the size of the sputter is measured in accordance with the measured shape of the sputter on each of the lateral sides. As a result, the size of sputter 7 can be measured even when the amount of emission of light by sputter 7 is small.

Further, in sputter measurement system 1 according to the present embodiment, telecentric lens 40 is disposed between molten portion 6 and camera 30. Therefore, the size of the sputter can be precisely measured regardless of whether the sputter is far from or close to the camera.

### [Modification 1]

In the above-described embodiment, the application range of each of spot light 21R and spot light 21L is matched with depth-of-field region R1 by adjusting the relative position between molten portion 6 and each of light source lenses 12R, 12L in the X direction or by adjusting the application angle of each of spot light 21R and spot light 21L. However, the method of matching the application range of each of spot light 21R and spot light 21L with depth-of-field region R1 is not limited to such a method.

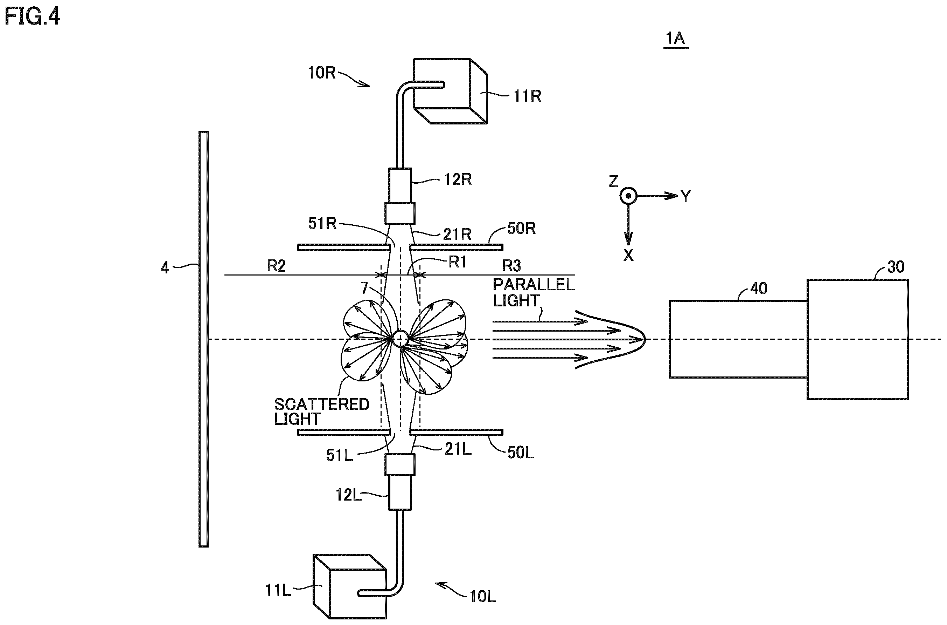

Fig. 4 is a diagram schematically showing a principle of measuring a sputter 7 by a sputter measurement system 1A according to a modification 1. Sputter measurement system 1A is obtained by adding slit plates 50R, 50L to sputter measurement system 1 shown in Fig. 1.

Slit plate 50R is disposed between molten portion 6 and light source lens 12R, and is provided with a slit 51R for matching the application range of spot light 21R with depth-of-field region R1 of telecentric lens 40.

Slit plate 50L is disposed between molten portion 6 and light source lens 12L, and is provided with a slit 51L for matching the application range of spot light 21L with depth-of-field region R1 of telecentric lens 40.

Thus, by disposing slit plate 50R between molten portion 6 and light source lens 12R and disposing slit plate 50L between molten portion 6 and light source lens 12L, the application range of each of spot light 21R and spot light 21L may be matched with depth-of-field region R1.

### [Modification 2]

Although the left and right sides of the sputter are irradiated by two spot light sources 10R, 10L on the left and right in the above-described embodiment, either one of the left and right sides of the sputter may be irradiated by one spot light source. Also in this way, the shape of the sputter on one of the left and right sides can be measured, the entire shape of sputter 7 can be estimated in accordance with the measured shape on the side, and the size of sputter 7 can be measured in accordance with the estimated entire shape.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope of the claims.

## Claims

1. A sputter measurement system that measures a size of a sputter (7) flying from a molten portion (6) that is melted during welding, the sputter measurement system comprising:
a camera (30) that captures an image of an observation region including the molten portion (6); and **characterized by**:
a spot light source (10R, 10L) that applies spot light (21R, 21L) toward the observation region from a lateral side with respect to the observation region when viewed from the camera (30); and
a controller (100) that measures the size of the sputter (7) based on the image captured by the camera (30).

2. The sputter measurement system according to claim 1, further comprising a telecentric lens (40) disposed between the molten portion (6) and the camera (30).

3. The sputter measurement system according to claim 2, wherein a position of the molten portion (6) is included in a depth-of-field range of the telecentric lens (40),
the sputter measurement system further comprising a member (50R, 50L) disposed between the molten portion (6) and the spot light source (10R, 10L), the member (50R, 50L) being provided with a slit (51R, 51L) for matching an application range of the spot light (21R, 21L) with the depth-of-field range of the telecentric lens (40).

## Patentansprüche

1. Spritzermesssystem, das eine Größe eines Spritzers (7) misst, der von einem geschmolzenen Abschnitt (6) fortfliegt, der während des Schweißens geschmolzen wird, wobei das Spritzermesssystem aufweist:
eine Kamera (30), die ein Bild eines Beobachtungsbereichs einschließlich des geschmolzenen Abschnitts (6) aufnimmt; und
**gekennzeichnet durch**:
eine Spotlichtquelle (10R, 10L), die ein Spotlicht (21R, 21L) in Richtung des Beobachtungsbereichs von einer von der Kamera (30) aus betrachtet lateralen Seite in Bezug auf den Beobachtungsbereich strahlt; und
einen Controller (100), der die Größe des Spritzers (7) auf Basis des durch die Kamera (30) aufgenommenen Bilds misst.

2. Spritzermesssystem nach Anspruch 1, ferner aufweisend eine telezentrische Linse (40), die sich zwischen dem geschmolzenen Abschnitt (6) und der Kamera (30) befindet.

3. Spritzermesssystem nach Anspruch 2, wobei eine Position des geschmolzenen Abschnitts (6) in einem Tiefenschärfenbereich der telezentrischen Linse (40) enthalten ist,
wobei das Spritzermesssystem ferner ein Element (50R, 50L) aufweist, das sich zwischen dem geschmolzenen Abschnitt (6) und der Spotlichtquelle (10R, 10L) befindet, wobei das Element (50R, 50L) mit einem Schlitz (51R, 51L) zum Anpassen einer Anwendungsreichweite des Spotlichts (21R, 21L) an den Tiefenschärfenbereich der telezentrischen Linse (40) versehen ist.

## Revendications

1. Système de mesure de la pulvérisation qui mesure la taille d'une pulvérisation (7) volant à partir d'une partie en fusion (6) qui est fondue pendant le soudage, le système de mesure de la pulvérisation comprenant :
une caméra (30) qui capture une image d'une région d'observation comprenant la partie fondue (6) ; et **caractérisé par** :
une source de lumière ponctuelle (10R, 10L) qui applique une lumière ponctuelle (21R, 21L) vers la région d'observation à partir d'un côté latéral par rapport à la région d'observation lorsqu'elle est vue depuis la caméra (30) ; et
un contrôleur (100) qui mesure la taille de la pulvérisation (7) sur la base de l'image capturée par la caméra (30).

2. Le système de mesure de la pulvérisation selon la revendication 1, comprenant en outre une lentille télécentrique (40) disposée entre la partie fondue (6) et la caméra (30).

3. Le système de mesure de la pulvérisation selon la revendication 2, dans lequel une position de la partie fondue (6) est incluse dans une plage de profondeur de champ de la lentille télécentrique (40),
le système de mesure de la pulvérisation comprend en outre un élément (50R, 50L) disposé entre la partie fondue (6) et la source de lumière ponctuelle (10R, 10L), l'élément (50R, 50L) étant pourvu d'une fente (51R, 51L) pour faire correspondre une plage d'application de la lumière ponctuelle (21R, 21L) avec la plage de profondeur de champ de la lentille télécentrique (40).
